Europäisches Patentamt

European Patent Office

Office européen des brevets

(11) Publication number: **0 404 709**

**A1**

# EUROPEAN PATENT APPLICATION

(21) Application number: 90500049.3

(51) Int. Cl.5: **B60R 25/02**

(22) Date of filing: **25.05.90**

(30) Priority: **19.06.89 ES 8902125**

(43) Date of publication of application:
**27.12.90 Bulletin 90/52**

(84) Designated Contracting States:
**AT BE CH DE DK FR GB GR IT LI LU NL SE**

(71) Applicant: **Orpi Gusine, Juan**
**Calle Lluis Dalmau, 21**
**E-08019 Barcelona(ES)**

Applicant: **Orpi Vilches, Ana Maria**
**Calle Lluis Dalmau, 21**
**E-08019 Barcelona(ES)**

Applicant: **Orpi Vilches, Javier**
**Calle Lluis Dalmau, 21**
**E-08019 Barcelona(ES)**

(72) Inventor: **Orpi Gusine, Juan**
**Calle Lluis Dalmau, 21**
**E-08019 Barcelona(ES)**
Inventor: **Orpi Vilches, Ana Maria**
**Calle Lluis Dalmau, 21**
**E-08019 Barcelona(ES)**
Inventor: **Orpi Vilches, Javier**
**Calle Lluis Dalmau, 21**
**E-08019 Barcelona(ES)**

(74) Representative: **Ponti Sales, Adelaida**
**Paseo de Gracia, 33**
**E-08007 Barcelona(ES)**

(54) **Anti-theft bar for motor vehicles.**

(57) It comprises two extensible sections (1) and (2) mounted telescopically, the first of them (1) provided with a hoop (3) lockable to secure the steering wheel (5) and a hook (7) to secure the pedal (12). The second section (2) has a pawl (9) linked to a lock (8) and capable of being inserted into one of the orifices (ID) situated in the first section (1), in order to immobilize both sections (1,2) of the telescopic bar. First section (2) of the bar has a ring (11) into which is introduced the hook (7), and some support feet (13).

The presence of the pawl (9) with the lock (8) to immobilize sections (1) and (2) of the telescopic bar once they have been secured to the steering wheel (5) and the pedal (12) confers double security on the equipment.

FIG. 3

EP 0 404 709 A1

## ANTI-THEFT BAR FOR MOTOR VEHICLES

This invention relates to an anti-theft bar for motor vehicles, incorporating means of security which make it practically inviolable.

### BACKGROUND OF THE INVENTION

Generally known at present are anti-theft bars for motor vehicles which are equipped with a hoop at one end, with a lock to ensure closure thereof, designed to secure the car's steering wheel of the vehicle, while at the opposite end there projects an extensible rod with a stop limiting extension thereof, of adjustable position, the rod presenting at one end a hook or open hoop destined to be situated around one of the foot control pedals of the vehicle.

The aim of these bars is to block the steering wheel and one of the control pedals of the vehicle, making it impossible to drive it.

These bars have the disadvantage of it being possible to put them out of action by cutting the hoop or by forcing the lock, in which case the bar can be detached from the steering wheel and the pedal to which the bar was attached, thus leaving the vehicle unprotected.

### DESCRIPTION OF THE INVENTION

The anti-theft bar object of this invention was designed with the aim of solving the above-mentioned disadvantages.

It is of the type disclosed in the background and characterized in that it comprises two rigid and extensible sections mounted telescopically, provided with a retaining pawl device which immobilizes them at any chosen position within established limits, this retainer pawl device being linked to a second security lock, one section of which bears the hoop and the rod with the end hook.

In one possible embodiment, one of the sections of the telescopic bar is provided with a lock which acts upon a rectractable pawl, which in operating position can be inserted at choice into one of the orifices arranged forming a row along the other section of the bar, in order to achieve immobilization of both sections.

Advantageously, one of the sections of the bar is provided with a ring situated near the end beyond which projects the extensible rod provided with the hook, which is then situated inside the ring when in operating position around the control pedal of the vehicle to which the bar is coupled.

Furthermore, the section of the bar bearing the ring is equipped with rigid feet which rest against the floor of the vehicle when the bar is in operating position.

### BRIEF DESCRIPTION OF THE DRAWINGS

For a better understanding of all that is described in the present specification some drawings are attached which, solely by way of example, show a practical version of embodiment of the anti-theft bar for motor vehicles.

In those drawings

figure 1 is a perspective view of the anti-theft bar detached from the steering wheel and from the pedal;

figure 2 is a front elevation view of the bar during the first phase of fitting, with the hook about to be placed in operating position around a control pedal;

figure 3 is a view similar to the previous one, but with the bar fitted in operating position, secured to the steering wheel and to the control pedal; and

figure 4 is a side elevation view of the bar fitted in operating position.

### DESCRIPTION OF A PREFERRED EMBODIMENT

The anti-theft bar for motor vehicles comprises in the drawings an assembly of two sections mounted telescopically, with references 1 and 2, respectively. At one end of section 1 is linked a hoop 3 of known type, with lock 4 which ensures closure thereof, destined to fit around the steering wheel 5 of the car.

To the interior of section 1 is fitted an extensible rod 6 which projects to the exterior and is equipped with a hook or open hoop 7 of known manufacture.

Section 2 of the telescopic bar is equipped with a lock 8 to which is linked a mobile pawl 9, movement of which is dependent upon operation of the lock by means of the corresponding key.

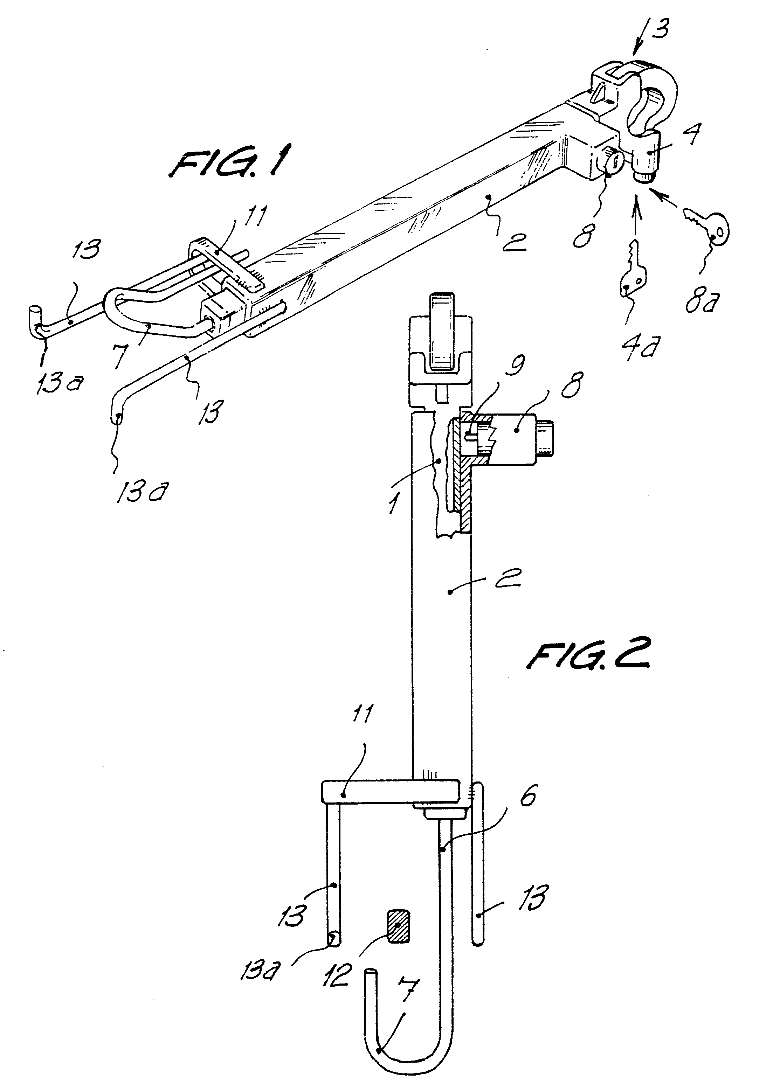

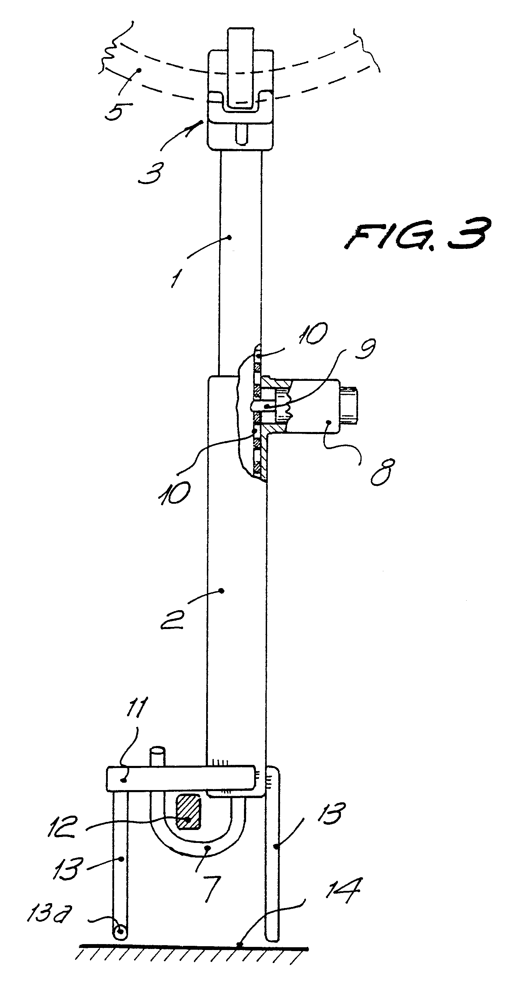

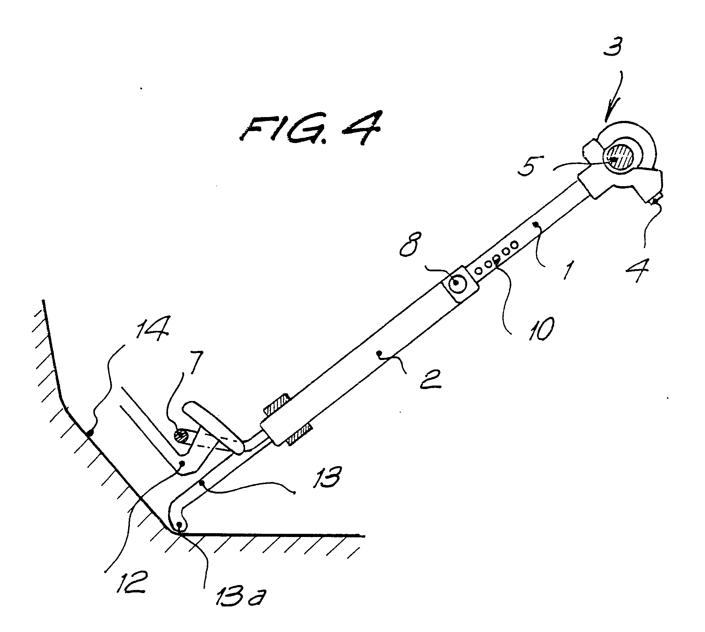

The pawl 9 can adopt a projecting position, in which position it can be inserted at choice into any one of the orifices 10 situated in a row throughout the length of section 1 of the telescopic bar, thus immobilizing one section of the bar with respect to the other (figure 3). In the withdrawn position, the retainer pawl 9 is detached from bar 1 (figure 2).

At the end furthest from the lock 8, section 2 of

2

the bar is provided with a fixed ring 11, inside of which is located the hook 7 when occupying operating position around one of the control pedals 12 of the vehicle (figure 3).

At the same end of section 2 of the telescopic bar on which the ring 11 is fitted, and on the ring itself, are feet 13 which rest on the floor 14 of the vehicle when the bar is in operating position (figures 3 and 4). The feet 13 have corresponding bracings 13a in order to avoid damage to the floor of the vehicle.

As emerges from the description and the drawing. the telescopic bar is placed in operating position in a similar way to known anti-theft bars, that is, by locating the hook 7 around the pedal 12 and, after extending the bar to the fullest extent up to stop. graduated previously by conventional means in function of extension of the rod 6, the hoop 3 is fitted around the steering wheel 5, immobilizing it in closed position by means of the lock 4 operated with the corresponding key 4a. Finally, the pawl 9 is inserted into the orifice 10 which is then situated opposite it, by turning the lock 8 with the key 8a, thus immobilizing the sections 1 and 2 of the telescopic bar with respect to each other.

The telescopic bar presents a double security system, thanks to the hoop 3, the lock 4 and the hook 7, on the one hand, and the retaining pawl device 9, 10 with the lock 8, on the other. In the event of one of the locks 4 and 8 being forced, there would still be the other to ensure blocked position of the bar. In the event that the hoop 3 is cut, it is still not possible to detach the hook 7 situated around the pedal 12, for sections 1 and 2 of the bar are mutually immobilized thanks to the retaining pawl device 9, 10 with the lock 8.

Finally, the ring 11 is a means which impedes access to the hook 7, when located around it with the bar in operating position, unless the two locks 4 and 8 are opened and all bar retention devices are disengaged.

Independent of the object of the invention shall be the materials used In manufacture of the components of the anti-theft bar, shapes and dimensions of same and all accessory details which might be presented, as long as these do not affect the essential features of same.

Claims

1. Anti-theft bar for motor vehicles, of the type equipped with a hoop (3) at one end, with a lock (4) to ensure closure thereof, designed to secure the steering wheel (5) of the vehicle, while at the opposite end there projects an extensible rod (6), with a stop limiting its extension of adjustable position, the rod (6) presenting at one end a hook or open hoop (7) destined to be situated around one of the control pedals (12) of the vehicle, characterized in that it comprises two rigid and extensible sections (1,2) mounted telescopically provided with a retaining pawl device (9, 10) which immobilizes them at any chosen position within established limits, this retaining pawl device (9, 10) being linked to a second security lock (8), one section of which bears the hoop (3) and the rod (6) with the end hook (7).

2. Anti-theft bar, according to claim 1, characterized in that one of the sections (2) of the telescopic bar is provided with a lock (8) which acts upon a rectractable pawl (9). which in operating position can be inserted at choice into one of the orifices (10) arranged forming a row along the other section (1) of the bar. in order to achieve immobilization of both sections (1, 2).

3. Anti-theft bar, according to claim 1, characterized in that one of the sections (2) of the bar is equipped with a ring (11) situated near the end from which projects the extensible rod (6) provided with the hook (7), which is situated inside the ring (11), when it is in operating position around the control pedal (12) of the vehicle to which the bar is coupled.

4. Anti-theft bar, according to claim 1, characterized in that the section (2) of the bar bearing the ring (11) is equipped with rigid feet (13) which rest against the floor of the vehicle when the bar is in operating position.

*FIG. 1*

*FIG. 2*

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4730470 (ZANE ET AL.)<br>* abstract; figures *<br>* column 2, line 41 - column 3, line 28 *<br>* column 4, lines 6 - 9 *<br>--- | 1 | B60R25/02 |
| A | FR-A-1562369 (SALUDES SIMON)<br>* the whole document *<br>--- | 1, 4 | |
| A | US-A-4835999 (CHANT)<br>* column 2, line 67 - column 3, line 35; figures *<br>--- | 1, 2 | |
| A | US-A-4825671 (WU)<br>* column 2, lines 3 - 27; figure 3 *<br>----- | 1, 2 | |
| | | | TECHNICAL FIELDS SEARCHED (Int. Cl.5)<br><br>B60R |

The present search report has been drawn up for all claims

| Place of search | Date of completion of the search | Examiner |
|---|---|---|
| THE HAGUE | 25 SEPTEMBER 1990 | DUBOIS B.F.J. |